# EUROPEAN PATENT APPLICATION

(11) **EP 4 699 841 A1**
(43) Date of publication of application: **25.02.2026**
(21) Application number: 25801494.3
(22) Date of filing: 18.03.2025
(51) Int. Cl.: B60K 6/40, B60K 1/02

(54) **POWER SYSTEM AND AUTOMOBILE**

(30) Priority: 17.06.2024 CN 202410774691
(71) Applicant: Chery Automobile Co., Ltd., Wuhu, Anhui 241006 (CN)
(72) Inventor: HAN, Yanyan, Wuhu, Anhui 241006 (CN); WANG, Wei, Wuhu, Anhui 241006 (CN); GAN, Shenglin, Wuhu, Anhui 241006 (CN); ZHANG, Yijing, Wuhu, Anhui 241006 (CN)
(74) Representative: Yang, Shu
(86) International application number: PCT/CN2025/083159
(87) International publication number: WO 2025/260866

(57) **Abstract**

The present disclosure relates to a power system and a vehicle. The power system includes a housing (1), a motor (2), a control module (3), a transmission mechanism (4), and a conductive member (5), the housing (1) being provided with a driving chamber (101), a transmission chamber (102), and a control chamber (103), wherein a part of the motor (2) is disposed in the driving chamber (101); the transmission mechanism (4) is disposed in the transmission chamber (102); the control module (3) is disposed in the control chamber (103); the motor (2) is drivingly connected to the transmission mechanism (4); the conductive member (5) extends into the control chamber (103) and is electrically connected to the control module (3), and the conductive member (5) further extends into the transmission chamber (102) and is electrically connected to the motor (2). The present disclosure can reduce the occupied space.

## Description

The present disclosure claims priority to Chinese Patent Application No. 202410774691.4, filed on June 17, 2024, and entitled "POWER SYSTEM AND VEHICLE", the entire content of which is incorporated herein by reference.

### TECHNICAL FIELD

The present disclosure relates to the field of vehicle layout technologies, in particular, relates to a power system and a vehicle.

### BACKGROUND

With the development of technology, vehicles, as a travel tool, have gradually become well known to the public.

A vehicle generally includes a motor, a control module, and a transmission mechanism. The control module is used to monitor a working condition and control the motor, and the transmission mechanism is used to output power of the motor.

In the related art, since the motor, the control module, and the transmission mechanism are indispensable components in a power output process of the vehicle, and all need to be disposed on the vehicle, the space of the vehicle is occupied.

### SUMMARY

In view of this, the present disclosure provides a power system and a vehicle to reduce the occupied space.

Specifically, the following technical solution is included:

In a first aspect of the present disclosure, a power system is provided. The power system includes a housing, a motor, a control module, a transmission mechanism, and a conductive member, the housing being provided with a driving chamber, a transmission chamber, and a control chamber, wherein
a part of the motor is disposed in the driving chamber;
the transmission mechanism is disposed in the transmission chamber;
the control module is disposed in the control chamber;
the motor is drivingly connected to the transmission mechanism; and
the conductive member extends into the control chamber and is electrically connected to the control module, and the conductive member further extends into the transmission chamber and is electrically connected to the motor.

Optionally, the driving chamber and the transmission chamber are disposed on the same side of the control chamber.

Optionally, an orthographic projection of the control chamber on a first projection plane at least partially overlaps with an orthographic projection of the transmission chamber on the first projection plane, and the orthographic projection of the control chamber on the first projection plane at least partially overlaps with an orthographic projection of the driving chamber on the first projection plane, the first projection plane being a plane perpendicular to a height direction of the housing.

Optionally, at least a part of the conductive member is disposed above the transmission mechanism, and an orthographic projection of the conductive member on the first projection plane is disposed in a part where the orthographic projection of the control chamber overlaps with the orthographic projection of the transmission chamber.

Optionally, the housing is provided with a first communication hole extending in the height direction of the housing and communicating the control chamber with the transmission chamber, wherein the conductive member extends into the transmission chamber through the first communication hole.

Optionally, the conductive member includes a sealing portion, a first connecting portion, and a second connecting portion, wherein the sealing portion connects the first connecting portion and the second connecting portion and seals the first communication hole, the first connecting portion is disposed in the control chamber, and the second connecting portion is disposed in the transmission chamber.

Optionally, an orthographic projection of the conductive member on a second projection plane partially overlaps with an orthographic projection of the motor on the second projection plane, the second projection plane being a plane perpendicular to a width direction of the housing.

Optionally, the housing is provided with a second communication hole extending in the width direction of the housing and communicating the driving chamber with the transmission chamber, wherein the motor is electrically connected to the conductive member through the second communication hole.

Optionally, the housing is provided with a third communication hole extending in the width direction of the housing and communicating the driving chamber with the transmission chamber, wherein the motor is drivingly connected to the transmission mechanism through the third communication hole, and the third communication hole and the second communication hole are disposed on the same side of the housing.

In a second aspect of the present disclosure, a vehicle is provided. The vehicle includes the power system according to the above technical solution.

The technical solution according to the embodiment of the present disclosure at least includes the beneficial effects: the housing can provide support for the motor, the control module, and the transmission mechanism. The control module is electrically connected to the motor through the conductive member and can control operating parameters of the motor, such that the motor outputs appropriate power and transmits it to the transmission mechanism. The conductive member is disposed in both the control chamber and the transmission chamber, which can realize the electrical connection between the motor and the control module on one hand, and improve the space utilization efficiency of the power system according to the present disclosure on the other hand, thereby improving the compactness and reducing the occupied space.

### BRIEF DESCRIPTION OF DRAWINGS

To describe the technical solutions in the embodiments of the present disclosure more clearly, the following briefly introduces the accompanying drawings to be used in the description of the embodiments. Obviously, the accompanying drawings in the following description show merely some embodiments of the present disclosure, and a person skilled in the art may still derive other drawings from these accompanying drawings without creative efforts.
FIG. 1 is a front schematic diagram of a power system according to some embodiments of the present disclosure;
FIG. 2 is a schematic full sectional view of a power system according to some embodiments of the present disclosure;
FIG. 3 is a schematic full sectional view of a housing of a power system according to some embodiments of the present disclosure;
FIG. 4 is a front schematic diagram of a housing of a power system according to some embodiments of the present disclosure;
FIG. 5 is a schematic full sectional view of a conductive member of a power system according to some embodiments of the present disclosure;
FIG. 6 is a partial schematic structural diagram of a housing of a power system according to some embodiments of the present disclosure; and
FIG. 7 is a schematic structural diagram of a housing of a power system according to some embodiments of the present disclosure.

Reference numerals in the drawings respectively denote:
1, housing; 101, driving chamber; 102, transmission chamber; 103, control chamber; 104, first communication hole; 105, second communication hole; 106, third communication hole; 107, window;
2, motor;
3, control module;
4, transmission mechanism;
5, conductive member; 51, first connecting portion; 52, second connecting portion; 53, sealing portion;
6, cover plate.

Through the above drawings, clear embodiments of the present disclosure have been shown and will be described in more detail later. These drawings and written descriptions are not intended to limit the scope of the concept of the present disclosure in any way, but to explain the concept of the present disclosure to those skilled in the art by referring to specific embodiments.

### DETAILED DESCRIPTION

For clearer descriptions of the objectives, technical solutions, and advantages of the present disclosure, embodiments of the present disclosure are described in detail hereinafter with reference to the accompanying drawings.

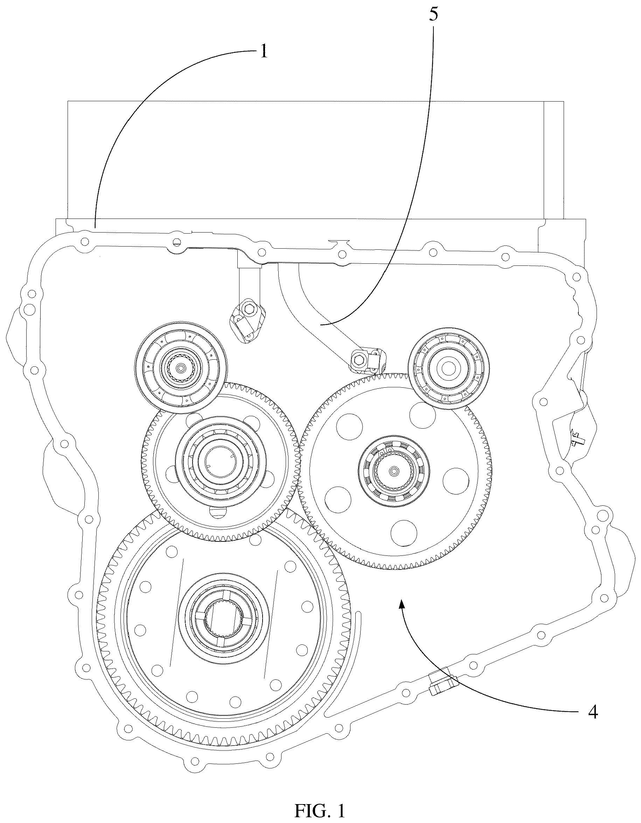

The directional nouns involved in the embodiments of the present disclosure, such as "upper", "lower", and "side", are generally based on the relative relationship of orientations shown in FIG. 1, and these directional nouns are adopted only for describing the relationship between structures more clearly, instead of describing absolute orientations. In the case that the product is placed in a different posture, the orientations may change, for example, "upper" and "lower" may be interchanged.

Unless otherwise defined, all technical terms used in the embodiments of the present disclosure have the same meaning as commonly understood by those ordinary skilled in the art.

To make the technical solution and advantages of the present disclosure clear, the embodiments of the present disclosure will be further described in detail with reference to the accompanying drawings.

In a first aspect of the present disclosure, a power system is provided. As shown in FIGS. 1, 2, and 3, the power system includes a housing 1, a motor 2, a control module 3, a transmission mechanism 4, and a conductive member 5. The housing 1 is provided with a driving chamber 101, a transmission chamber 102, and a control chamber 103.

A part of the motor 2 is disposed in the driving chamber 101.

The transmission mechanism 4 is disposed in the transmission chamber 102.

The control module 3 is disposed in the control chamber 103.

The motor 2 is drivingly connected to the transmission mechanism 4.

The conductive member 5 extends into the control chamber 103 and is electrically connected to the control module 3, and the conductive member 5 further extends into the transmission chamber 102 and is electrically connected to the motor 2.

It can be understood that the housing 1 can provide support for the motor 2, the control module 3, and the transmission mechanism 4. The control module 3 is electrically connected to the motor 2 through the conductive member 5, and can control operating parameters of the motor 2, such that the motor outputs appropriate power and transmits it to the transmission mechanism 4. The conductive member 5 is disposed in the control chamber 103 and the transmission chamber 102, which can realize the electrical connection between the motor and the control module on one hand, and improve the space utilization efficiency of the power system according to the present disclosure on the other hand, thereby improving the compactness and reducing the occupied space.

In the embodiments of the present disclosure, at least a part of the motor 2 is disposed in the driving chamber 101, which is beneficial for reducing the size of the power system according to the present disclosure.

Specifically, in the case that a part of the motor 2 is disposed in the driving chamber 101, the other part thereof is disposed outside the driving chamber 101. Therefore, the housing 1 does not need to completely enclose the motor 2. Compared with the case where the motor is fully enclosed, the part of the motor 2 exposed outside the driving chamber 101 is not surrounded by the wall surface of the driving chamber 101, and thus occupies less space in this direction, which is beneficial for reducing the volume of the housing 1.

In the embodiments of the present disclosure, the part of the motor 2 opposite to an output end thereof may be disposed outside the driving chamber 101.

In the embodiments of the present disclosure, the motor 2 may be connected to the wall surface of the driving chamber 101 by bolts.

In the embodiments of the present disclosure, the driving chamber 101 may include two sub-chambers. The two sub-chambers are separated by reinforcing ribs, and each sub-chamber is provided with one motor 2 therein.

In the embodiments of the present disclosure, since various components of the transmission mechanism 4 generally rotate during operation, the transmission mechanism 4 disposed in the transmission chamber 102 can be protected by the housing 1 on one hand, and is also beneficial for recovering lubricating oil for lubricating and cooling the transmission mechanism 4 on the other hand.

In the embodiments of the present disclosure, the transmission mechanism 4 may be supported by the motor 2 through the part forming a drivingly connection with the motor 2, to be stably disposed in the transmission chamber 102.

The motor 2 may include a rotor shaft. The rotor shaft extends into the transmission chamber 102, the transmission mechanism 4 includes a gear, and the gear sleeves the rotor shaft and is drivingly connected to the rotor shaft by means of key transmission and the like. In this way, the motor 2 can support the transmission mechanism 4. Optionally, a wall surface of the transmission chamber 102 is provided with a groove, a bearing may be disposed in the groove, and the rotor shaft penetrates and is supported by the bearing.

In the embodiments of the present disclosure, the motor 2 may include a first machine body and a second machine body, and the first machine body and the second machine body are drivingly connected to the transmission mechanism 4, respectively. The first machine body may receive power through the transmission mechanism 4, and the second machine body may be configured to transmit power to the transmission mechanism 4.

In the embodiments of the present disclosure, the control module 3 is disposed in the control chamber 103, which is beneficial for the control module 3 to be close to the motor 2 and for improving the reliability of the electrical connection therebetween.

It can be understood that both the control module 3 and the motor 2 are disposed in the housing 1, which is beneficial for shortening the length of the conductive member 5 electrically connecting the two. The shorter conductive member 5 has lower resistance, which is also convenient for an assembler to observe and assemble the conductive member 5.

In the embodiments of the present disclosure, the conductive member 5 extends into the transmission chamber 102 and is electrically connected to the motor 2, and thus occupies less space of the control chamber 103 and does not occupy the space of the driving chamber 101. It is unnecessary for the driving chamber 101 to give up extra space for the conductive member 5, and at the same time, since there are generally no electrical components disposed in the transmission chamber 102, the conductive member 5 disposed in the transmission chamber 102 has certain stability and does not occupy the space of the vehicle. In addition, the transmission mechanism 4 requires a certain amount of space during operation, and thus generally has a certain distance from the wall surface of the transmission chamber 102, and the conductive member 5 may be disposed within this distance, which improves the space utilization efficiency of the transmission chamber 102 and reduces the volume of the power system according to the present disclosure, to reduce the space occupation of the vehicle.

In the embodiments of the present disclosure, the control module 3 may be connected with a wall surface of the control chamber 103 by bolts.

In the embodiments of the present disclosure, the conductive member 5 extends into the control chamber 103 and is electrically connected to the control module 3, and the conductive member 5 further extends into the transmission chamber 102 and is electrically connected to the motor 2.

In the embodiments of the present disclosure, an opening of the driving chamber 101 and an opening of the transmission chamber 102 are disposed on opposite sides of the housing 1, respectively.

In the embodiments of the present disclosure, the housing 1 may be integrally molded by means of casting and the like, and the driving chamber 101, the transmission chamber 102, and the control chamber 103 are formed.

In the embodiments of the present disclosure, the control module 3 may be an electronic control unit (ECU).

In the embodiments of the present disclosure, the material of the conductive member 5 may include a conductive metal such as copper to realize the electrical connection between the motor 2 and the control module 3. The conductive member 5 may be configured to transmit current and voltage to the motor 2 to control the operation of the motor 2.

In the embodiments of the present disclosure, the control module 3 may control the output power, rotational speed, and start-stop of the motor 2 through the conductive member 5.

In the embodiments of the present disclosure, the control chamber 103 and the driving chamber 101 are relatively closed, that is, the control module 3 of the control chamber 103 will be blocked by the housing 1 and cannot be in direct contact with the motor 2 of the driving chamber 101. Correspondingly, the motor 2 of the driving chamber 101 will also be blocked by the housing 1 and cannot be in direct contact with the control module 3 of the control chamber 103.

In the embodiments of the present disclosure, the power system includes a cover body, the control chamber 103 is provided with an opening for placing the control module 3, and at the same time, the opening may be sealed by the cover body. In this way, the situation where the control module 3 is short-circuited due to impurity pollution can be reduced. Sealing may be formed between the cover body and the opening of the control chamber 103 through a bolt connection.

In the embodiments of the present disclosure, the transmission mechanism 4 includes a reduction shaft, a gear, and a differential. The reduction shaft is drivingly connected to the motor, the gear is sleeved on the reduction shaft and is drivingly connected to the reduction shaft, and the gear also meshes with the differential. In this way, the power transmission of the motor is realized.

In the embodiments of the present disclosure, the opening of the transmission chamber 102 and the opening of the driving chamber 101 respectively face two opposite sides of the housing 1. In this way, it is beneficial for assembling the motor 2 and the transmission mechanism 3 into the driving chamber 101 and the transmission chamber 102, respectively.

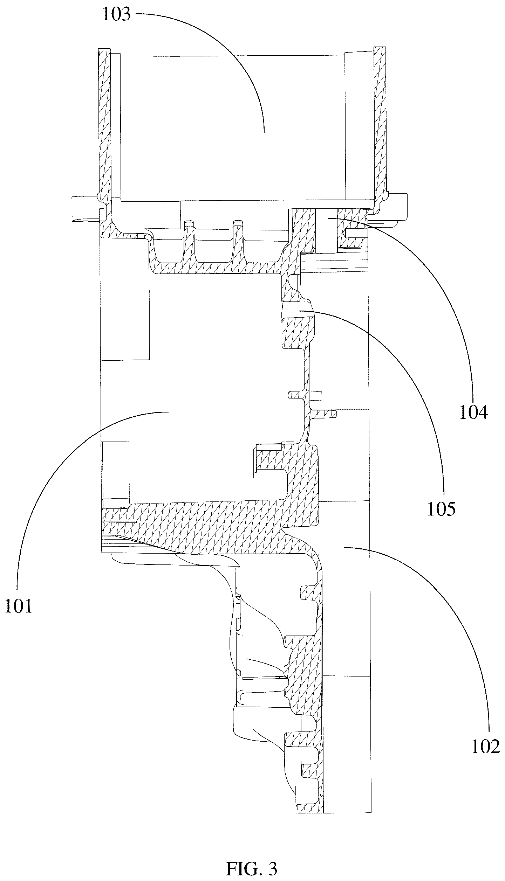

In some embodiments of the present disclosure, as shown in FIG. 3, the driving chamber 101 and the transmission chamber 102 are disposed on the same side of the control chamber 103.

It can be understood that the driving chamber 101 and the transmission chamber 102 are disposed on the same side of the control chamber 103, which is beneficial for the driving chamber 101 and the control chamber 103 to form an adjacent relationship in position. In this way, it is beneficial for the motor 2 to directly extend into the transmission chamber 102 and to be drivingly connected to the transmission mechanism 4.

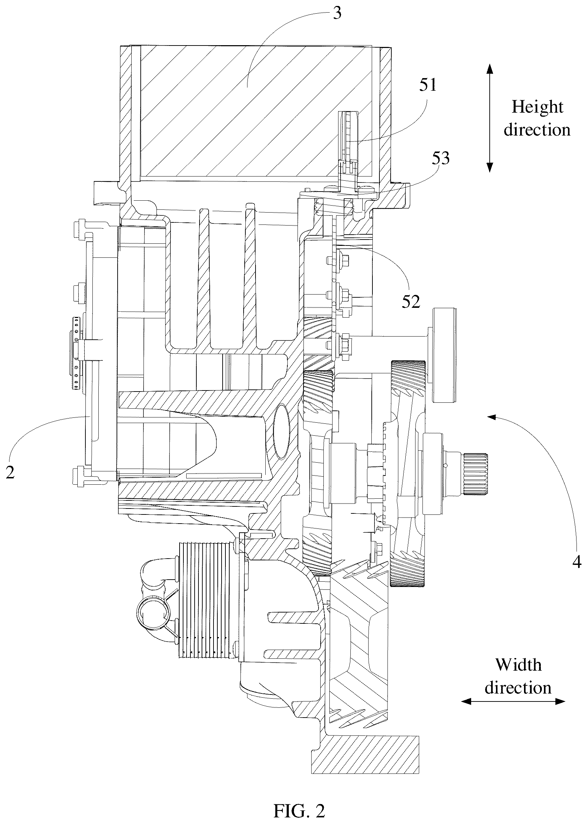

In some embodiments of the present disclosure, as shown in FIGS. 2 and 3, an orthographic projection of the control chamber 103 on a first projection plane at least partially overlaps with an orthographic projection of the transmission chamber 102 on the first projection plane, and the orthographic projection of the control chamber 103 on the first projection plane at least partially overlaps with an orthographic projection of the driving chamber 101 on the first projection plane, the first projection plane being a plane perpendicular to a height direction of the housing 1. The height direction of the housing 1 is as shown in FIG. 2.

It can be understood that such an arrangement is beneficial for the conductive member 5 to directly extend from the control chamber 103 into the transmission chamber 102, such that the conductive member 5 is completely disposed inside the housing 1 and protected by the housing 1, which not only is beneficial for the conductive member 5 to electrically connect the motor 2 and the control module 3, but also can shorten the length of the conductive member 5 electrically connecting the motor 2 and the control module 3.

In some embodiments of the present disclosure, the power system further includes a lubrication mechanism, and the lubrication mechanism is used to lubricate the transmission mechanism 4 and the conductive member 5. The lubrication mechanism may include an oil pump, which is in communication with the transmission chamber 102 to spray lubricating oil into the transmission chamber 102.

In some embodiments of the present disclosure, as shown in FIG. 2, at least a part of the conductive member 5 is disposed above the transmission mechanism 4, and an orthographic projection of the conductive member 5 on the first projection plane is disposed in the part where the orthographic projection of the control chamber 103 overlaps with the orthographic projection of the transmission chamber 102.

It can be understood that the conductive member 5 may directly extend into the transmission chamber 102 from the part where the orthographic projection of the transmission chamber 102 overlaps with the orthographic projection of the control chamber 103, which is beneficial for the electrical connection between the control module 3 and the motor 2.

In addition, the conductive member 5 disposed above the transmission mechanism 4 can reduce the possibility of collision with the transmission mechanism 4. At the same time, the lubricating oil for lubricating the conductive member 5 may also be in contact with the transmission mechanism 4 under the action of gravity, which improves the lubrication efficiency and also prevents the conductive member 5 from being soaked in the lubricating oil for a long time.

In some embodiments of the present disclosure, as shown in FIGS. 1, 2, and 3, the housing 1 is provided with a first communication hole 104. The first communication hole 104 extends in the height direction of the housing 1 and communicates the control chamber 103 with the transmission chamber 102, and the conductive member 5 extends into the transmission chamber 102 through the first communication hole 104. The height direction of the housing 1 is as shown in FIG. 2.

It can be understood that the first communication hole 104 communicates the control chamber 103 with the transmission chamber 102, allowing the conductive member 5 to pass through, which facilitates the electrical connection between the control module 3 and the motor 2 through the conductive member 5. The first communication hole 104 extending in the height direction of the housing 1 is beneficial for shortening the length of the conductive member 5 passing therethrough, thereby improving the electrical connection performance of the conductive member 5.

In some embodiments of the present disclosure, the first communication hole 104 may be formed by means of drilling after the housing 1 is cast.

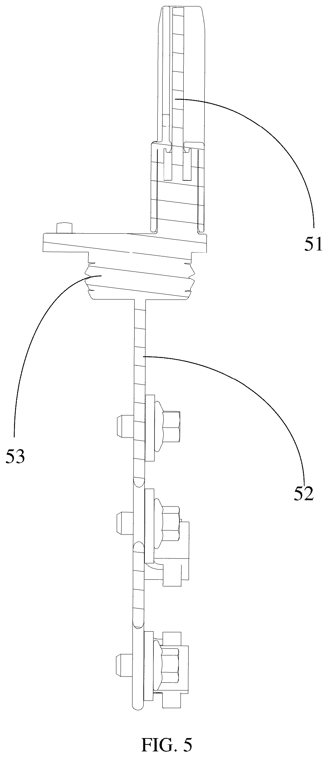

In some embodiments of the present disclosure, as shown in FIG. 5, the conductive member 5 includes a sealing portion 53, a first connecting portion 51, and a second connecting portion 52. The sealing portion 53 connects the first connecting portion 51 and the second connecting portion 52, the sealing portion 53 seals the first communication hole 104. The first connecting portion 51 is disposed in the control chamber 103, and the second connecting portion 52 is disposed in the transmission chamber 102.

It can be understood that the first connecting portion 51 is disposed in the control chamber 103 and may be electrically connected to the control module 3. The second connecting portion 52 is disposed in the transmission chamber 102 and may be electrically connected to the motor 2. The sealing portion 53 can seal the first communication hole 104. On one hand, the short circuit of the control module 3 caused by the fact that the lubricating oil in the transmission chamber 102 enters the control chamber 103 through the first communication hole 104 and pollutes the control module 3 can be reduced; and on the other hand, a frictional force can be generated from the contact with the wall surface of the first communication hole 104 to support the conductive member 5.

In the embodiments of the present disclosure, the sealing portion 53 and the first communication hole 104 may be connected and sealed by threads. Specifically, the sealing portion 53 is provided with external threads extending spirally in an extending direction of the first communication hole 104, the wall surface of the first communication hole 104 is provided with internal threads matching the external threads, and the two are engaged to form a seal. The gap between the wall surface of the first communication hole 104 and the sealing portion 53 may be filled to improve the sealing performance.

In the embodiments of the present disclosure, the first connecting portion 51 may be electrically connected to the control module 3 by means of a plug-in and the like. Specifically, the control module 3 is provided with an interface, and the first connecting portion 51 is inserted into the interface to form a plug-in and electrical connection with the control module 3.

In the embodiments of the present disclosure, the second connecting portion 52 is electrically connected to an electric wire of the motor 2 by means of bolt fastening, welding, and the like. The number of the second connecting portions 52 may be one, two, three, or more.

In the embodiments of the present disclosure, a cross-sectional area of the first sealing portion 53 is greater than a cross-sectional area of the first connecting portion 51 and greater than a cross-sectional area of the second connecting portion 52.

It can be understood that there are generally a plurality of second connecting portions 52, the current generated by a single second connecting portion 52 is smaller, but the currents generated by all the second connecting portions 52 need to be collected in the first sealing portion 53 to pass through the first connecting portion 51. Therefore, the current passing through the first sealing portion 53 is larger during operation, and the cross-sectional area of the first sealing portion 53 is set to be greater than the cross-sectional area of the first connecting portion 51 and greater than the cross-sectional area of the second connecting portion 52, which is beneficial for reducing the internal resistance of the first sealing portion 53. The first sealing portion 53 with reduced internal resistance can avoid fusing of the second connecting portions 52 due to excessive heat generation caused by a too large current. In this way, the working safety of the conductive member 5 can be improved.

In some embodiments of the present disclosure, an orthographic projection of the conductive member 5 on a second projection plane partially overlaps with an orthographic projection of the motor 2 on the second projection plane, the second projection plane being a plane perpendicular to a width direction of the housing 1. The width direction of the housing 1 is as shown in FIG. 2.

It can be understood that such an arrangement can improve the structural compactness of the power system according to the present disclosure, which is beneficial for reducing the volume of the power system according to the present disclosure. Specifically, the orthographic projection of the conductive member 5 on the second projection plane partially overlaps with the orthographic projection of the motor 2 on the second projection plane. On one hand, the conductive member 5 can be close to the motor 2, which is beneficial for forming the electrical connection between the conductive member 5 and the motor 2. On the other hand, due to the overlapping part of the conductive member 5 and the motor 2, a layout that the motor 2 and the conductive member 5 are both disposed below the control module 3 is formed instead of a layout that the motor 2, the conductive member 5, and the control module 3 are disposed in sequence in the height direction of the housing 1. Therefore, the housing 1 is shortened to some extent in the height direction. In this way, the height of the power system according to the present disclosure can be reduced, and the volume thereof is reduced.

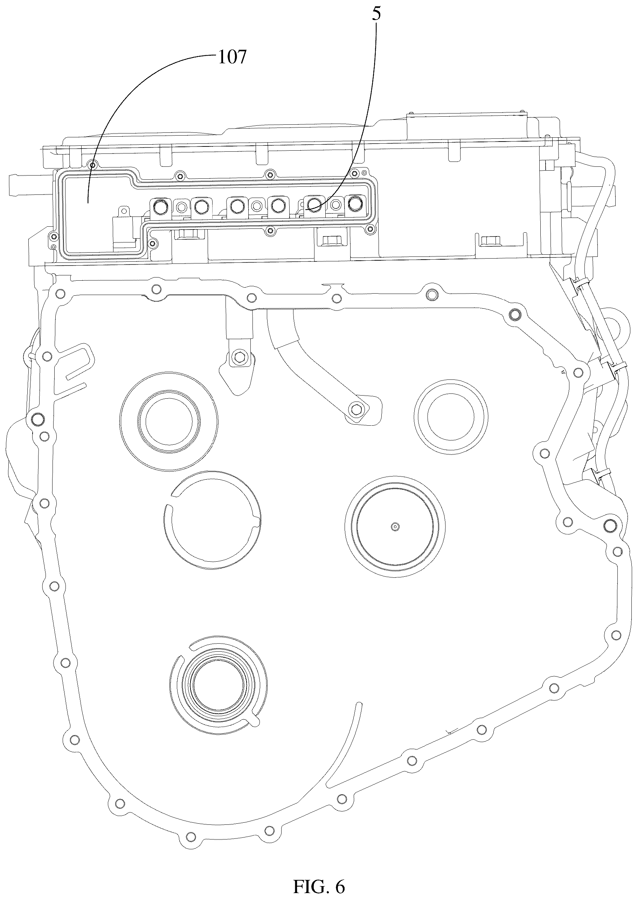

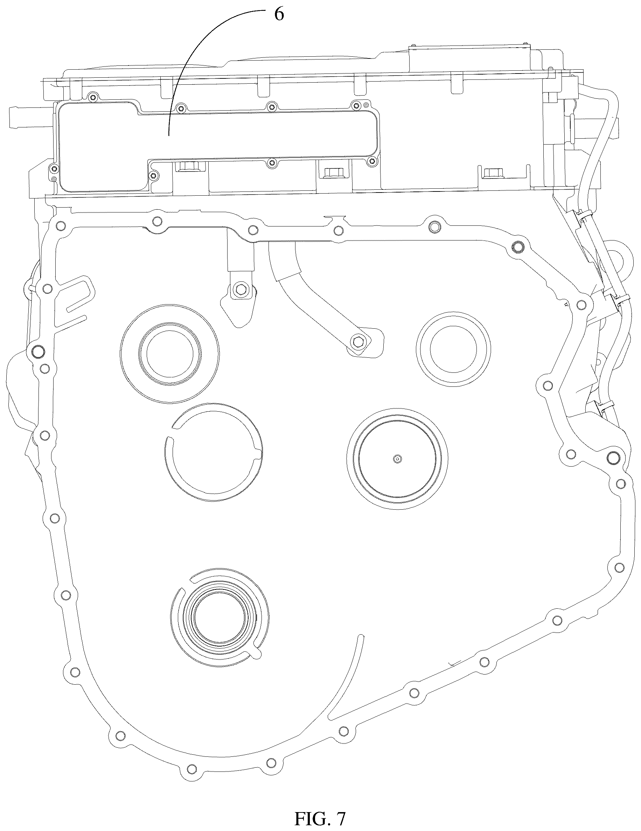

In the embodiments of the present disclosure, as shown in FIGS. 6 and 7, the power system includes a cover plate 6, and the control chamber is provided with a window 107. The cover plate 6 may seal the window 107. The orthographic projection of a part of the conductive member 5 extending into the control chamber 103 on the second projection plane partially overlaps with an orthographic projection of the window 107 on the second projection plane, and the conductive member 5 is closer to the window 107 than the control module 3. In this way, it is beneficial for the assembler to connect the conductive member 5 and the control module 3 through the window 107, and to seal the window 107 with the cover plate 6 after connecting the conductive member 5 and the control module 3, which reduces the pollution to the control module 3 and the conductive member 5.

Optionally, the connection between the conductive member 5 and the control module 3 may be realized by bolts.

Optionally, the window 107 is disposed on one side of the control chamber 103 adjacent to the transmission chamber 102.

Optionally, the cover plate 6 and the housing 1 may be connected by bolts to form a sealing surface around the window 107, and the sealing for the window 107 is formed.

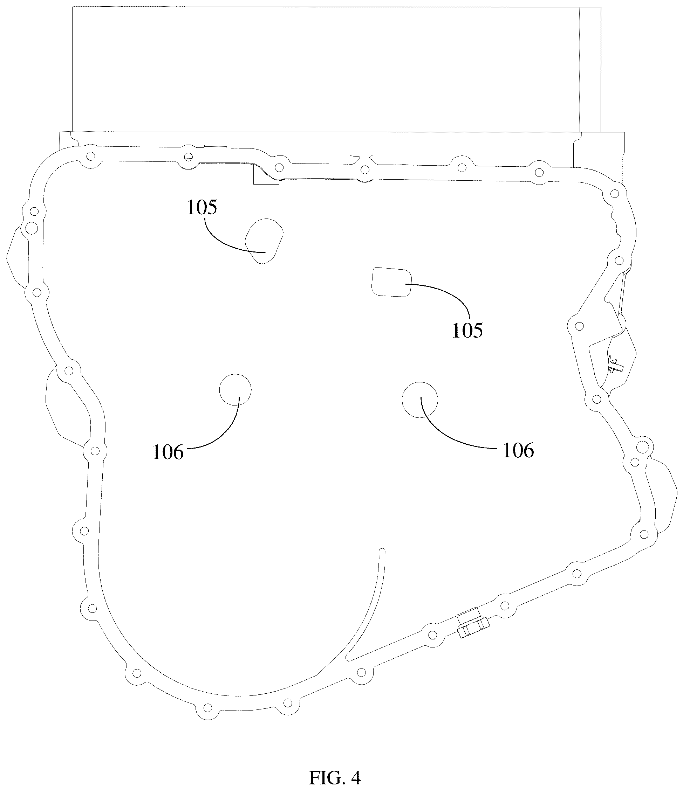

In some embodiments of the present disclosure, as shown in FIG. 4, the housing 1 is provided with a second communication hole 105. The second communication hole 105 extends in the width direction of the housing 1 and communicates the driving chamber 101 with the transmission chamber 102, and the motor 2 is electrically connected to the conductive member 5 through the second communication hole 105.

It can be understood that the second communication hole 105 provides a passage for the motor 2 to be electrically connected to the conductive member 5, which is beneficial for the electrical connection between the motor 2 and the conductive member 5 in the transmission chamber 102.

In some embodiments of the present disclosure, as shown in FIG. 4, the housing 1 is provided with a third communication hole 106. The third communication hole 106 extends in the width direction of the housing 1 and communicates the driving chamber 101 with the transmission chamber 102. The motor 2 is drivingly connected to the transmission mechanism 4 through the third communication hole 106, and the third communication hole 106 and the second communication hole 105 are disposed on the same side of the housing 1.

It can be understood that the third communication hole 106 may allow the motor 2 to pass through to be drivingly connected to the transmission mechanism 4, and may also provide support for the motor 2 and the transmission mechanism 4. The third communication hole 106 and the second communication hole 105 are disposed on the same side of the housing 1, such that the weight of the motor 2 and the weight of the transmission mechanism 4 are concentrated on the wall surface of the driving chamber 101. In this way, it is beneficial for the direct transmission of axial and lateral moments of the transmission mechanism 4 to the housing 1, thus the modality of the power system according to the present disclosure can be improved, and the noise, vibration, and harshness (NVH) performances of the power system according to the present disclosure can also be improved.

In a second aspect of the present disclosure, a vehicle is provided. The vehicle includes the power system according to the above embodiments.

It can be understood that due to the adoption of the power system according to the above embodiments, the vehicle according to the present disclosure has the same technical effects as those of the above embodiments, which will not be repeated here.

In the embodiments of the present disclosure, the vehicle may be an electric vehicle or a hybrid power vehicle.

In the embodiments of the present disclosure, the vehicle may include an engine, and the motor 2 includes a first machine body and a second machine body. The engine is drivingly connected to the first machine body through a transmission mechanism. In this way, the power generated by the engine can be transmitted to the first machine body through the transmission mechanism 4, and the first machine body is driven by the power to generate electric energy for the second machine body for operation.

It can be understood by those ordinary skilled in the art that all or part of the steps for implementing the above embodiments may be completed by hardware, or may be completed by instructing relevant hardware through a program. The program may be stored in a computer-readable storage medium, which may be a read-only memory, a magnetic disk, an optical disk, or the like.

Described above are merely optional embodiments of the present disclosure, and are not intended to limit the present disclosure. Any modifications, equivalent replacements, improvements, and the like made within the spirit and principles of the present disclosure should be included within the protection scope of the present disclosure.

## Claims

1. A power system, comprising a housing (1), a motor (2), a control module (3), a transmission mechanism (4), and a conductive member (5), the housing (1) being provided with a driving chamber (101), a transmission chamber (102), and a control chamber (103), wherein
a part of the motor (2) is disposed in the driving chamber (101);
the transmission mechanism (4) is disposed in the transmission chamber (102);
the control module (3) is disposed in the control chamber (103);
the motor (2) is drivingly connected to the transmission mechanism (4); and
the conductive member (5) extends into the control chamber (103) and is electrically connected to the control module (3), and the conductive member (5) further extends into the transmission chamber (102) and is electrically connected to the motor (2).

2. The power system according to claim 1, wherein the driving chamber (101) and the transmission chamber (102) are disposed on the same side of the control chamber (103).

3. The power system according to claim 2, wherein an orthographic projection of the control chamber (103) on a first projection plane at least partially overlaps with an orthographic projection of the transmission chamber (102) on the first projection plane, and the orthographic projection of the control chamber (103) on the first projection plane at least partially overlaps with an orthographic projection of the driving chamber (101) on the first projection plane, the first projection plane being a plane perpendicular to a height direction of the housing (1).

4. The power system according to claim 3, wherein at least a part of the conductive member (5) is disposed above the transmission mechanism (4), and an orthographic projection of the conductive member (5) on the first projection plane is disposed in a part where the orthographic projection of the control chamber (103) overlaps with the orthographic projection of the transmission chamber (102).

5. The power system according to claim 4, wherein the housing (1) is provided with a first communication hole (104) extending in the height direction of the housing (1) and communicating the control chamber (103) with the transmission chamber (102), wherein the conductive member (5) extends into the transmission chamber (102) through the first communication hole (104).

6. The power system according to claim 5, wherein the conductive member (5) comprises a first connecting portion (51), a second connecting portion (52) and a sealing portion (53), wherein the sealing portion (53) connects the first connecting portion (51) and the second connecting portion (52) and seals the first communication hole (104), the first connecting portion (51) is disposed in the control chamber (103), and the second connecting portion (52) is disposed in the transmission chamber (102).

7. The power system according to claim 1, wherein an orthographic projection of the conductive member (5) on a second projection plane partially overlaps with an orthographic projection of the motor (2) on the second projection plane, the second projection plane being a plane perpendicular to a width direction of the housing (1).

8. The power system according to claim 1, wherein the housing (1) is provided with a second communication hole (105) extending in a width direction of the housing (1) and communicating the driving chamber (101) with the transmission chamber (102), wherein the motor (2) is electrically connected to the conductive member (5) through the second communication hole (105).

9. The power system according to claim 8, wherein the housing (1) is provided with a third communication hole (106) extending in the width direction of the housing (1) and communicating the driving chamber (101) with the transmission chamber (102), wherein the motor (2) is drivingly connected to the transmission mechanism (4) through the third communication hole (106), and the third communication hole (106) and the second communication hole (105) are disposed on the same side of the housing (1).

10. A vehicle, comprising the power system as defined in any one of claims 1 to 9.
